# EUROPÄISCHE PATENTANMELDUNG

(11) **EP 0 971 089 A2**
(43) Veröffentlichungstag der Anmeldung: **12.01.2000**
(21) Anmeldenummer: 99110946.3
(22) Anmeldetag: 07.06.1999
(51) Int. Cl.: E05F 1/10, B62D 25/12, F16F 9/52

(54) **Schwenklagerung für ein klappenartiges Bauteil, insbesondere eine Kraftfahrzeug-Heckklappe**

(30) Priorität: 09.07.1998 DE 19830700
(71) Anmelder: Volkswagen Aktiengesellschaft, 38436 Wolfsburg (DE)
(72) Erfinder: Bekemeier, Frank, 38533 Rethen (DE); Tran, Ky-Tu, 38108 Braunschweig (DE); Arnheim, Hans-Rudolf, Dipl.-Ing., 38477 Jembke (DE); Massarczyk, Björn-Dennis, 38442 Wolfsburg (DE)

(57) **Zusammenfassung**

An einem Scharnierbügel (1) für eine schwenkbare Kraftfahrzeug-Heckklappe greift in einem einen Hebelarm definierenden Abstand von seinem ortsfesten Schwenklager (2) eine Gasfeder (6) zur Unterstützung von Schwenkbewegungen der Klappe an. Zur Kompensation des Temperaturgangs der von der Gasfeder (6) ausgeübten Kräfte ist ein temperaturabhängig angesteuerter Servo (10) vorgesehen, der bei Temperaturänderungen durch Verlagerung der Angriffsstelle der Gasfeder (6) den Temperaturgang der von ihr ausgeübten Kräfte kompensiert.

## Beschreibung

Die Erfindung betrifft eine Schwenklagerung gemäß dem Oberbegriff des Patentanspruchs 1.

Schwenklagerungen dieses Aufbaues sind im großen Umfang zur Lagerung von Kraftfahrzeug-Heckklappen am Rohbau des Kraftfahrzeugs im Einsatz. Sie weisen derart geformte (geschwungene) Scharnierbügel auf, daß Öffnungsbewegungen der Heckklappe bis zur völligen Freigabe des Zugangs zum Heckraum möglich sind, ohne daß Bestandteile des Rohbaues des Fahrzeugs, also bezüglich der Heckklappe ortsfeste Teile desselben, diese Schwenkbewegung behindern.

Insbesondere im Hinblick auf das Gewicht derartiger Heckklappen sieht man Gasfedern zwischen einer ortsfesten Abstützung und dem Scharnierbügel vor, die am Scharnierbügel unter Bildung eines Hebelarms gegenüber dem Schwenklager angreifen. Die von einer derartigen Gasfeder ausgeübten Kräfte, in der Regel Druckkräfte, unterstützen dann nach Aufhebung der Verriegelung der Heckklappe die Schwenkbewegung der Klappe zur Freigabe der Öffnung zum Heckraum des Fahrzeugs. Bekannt sind auch Konstruktionen, die Gasfedern zur Unterstützung der Schließbewegung der Heckklappe einsetzen.

Von Vorteil ist auch der Einsatz von mit Gasfedern ausgerüsteten Schwenklagerungen für Kraftfahrzeugtüren. Auch dann dient die Gasfeder zur Unterstützung der Schwenkbewegungen der Tür.

An dieser Stelle sei eingefügt, daß der Einsatz der Erfindung auch nicht auf Kraftfahrzeuge beschränkt ist, sondern immer dann erfolgen kann, wenn eine gattungsgemäße Schwenklagerung mit einer Gasfeder vorgesehen ist.

Gasfedern haben infolge der Ausnutzung des Expansionsverhaltens der in ihnen verwendeten Gase den grundsätzlichen Nachteil, daß die von ihnen ausgeübten, die Schwenkbewegung der Klappe oder Tür unterstützenden Kräfte in relativ großem Maße temperaturabhängig sind. Das bedeutet beispielsweise, daß bei hohen Temperaturen infolge der dann starken Ausdehnung des Gases in der betreffenden Gasfeder diese relativ große Kräfte und Momente auf das klappenartige Bauteil ausübt, während bei tiefen Temperaturen diese Kräfte erheblich geringer sind. Da beispielsweise ein Kraftfahrzeug sehr unterschiedlichen Temperaturen ausgesetzt ist, je nach Jahreszeit und Sonnenbestrahlung, muß bei der Auslegung der Schwenklagerung diesbezüglich ein Kompromiß getroffen werden. Das bedeutet aber, daß bestimmte Temperaturbedingungen zu einer unerwünschten Vergrößerung oder Verringerung der zum Öffnen oder Schließen des schwenkbaren Bauteils erforderlichen, von Hand aufzubringenden Kräfte führen können. Auch dann, wenn das Öffnen bzw. Schließen nicht von Hand erfolgt, sondern, wie beim modernen Kraftfahrzeugen für Heckklappen zunehmend üblich, hierfür ein motorischer Antrieb dient, sind größere temperaturabhängige Schwankungen der von der Gasfeder ausgeübten Kräfte nachteilig, da ein derartiger Schwenkantrieb dann für den ungünstigsten Fall, also minimale Unterstützung der Schwenkbewegung durch die Gasfeder, ausgelegt sein muß.

Der Erfindung liegt mithin die Aufgabe zugrunde, eine gattungsgemäße Schwenklagerung zu schaffen, bei der unter Einsatz einfacher, leicht zu beherrschender Mittel eine zumindest annähernde Kompensation des Temperaturgangs der von der Gasfeder ausgeübten Kräfte erfolgt.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Ein Vorteil der Erfindung ist darin zu sehen, daß sie an der grundsätzlichen Konstruktion der Schwenklagerung nichts ändert, sondern lediglich eine durch temperaturabhängige Mittel bewerkstelligte temperaturabhängige Einstellung eines Anlenkungsortes der Gasfeder vorsieht. Sinken bei Temperaturen die von der Gasfeder ausgeübten Kräfte, bewirken die erfindungsgemäß vorgesehenen Mittel einer Verlagerung der Anlenkungsstelle der Gasfeder beispielsweise an einem Scharnierbügel im Sinne einer Vergrößerung des Hebelarmes, d. h. des Abstands vom Schwenklager; bei sehr hohen Temperaturen erfolgt demgegenüber eine Verringerung dieses Abstands und damit eine Verringerung des Hebelarmes. Man kann die Konstruktion aber auch so treffen, daß durch die Veränderung des Anlenkungsortes eine Änderung der Richtung der auf das klappenartige Bauteil von der Gasfeder ausgeübten Kraft zur Kompensation des Temperaturganges erfolgt.

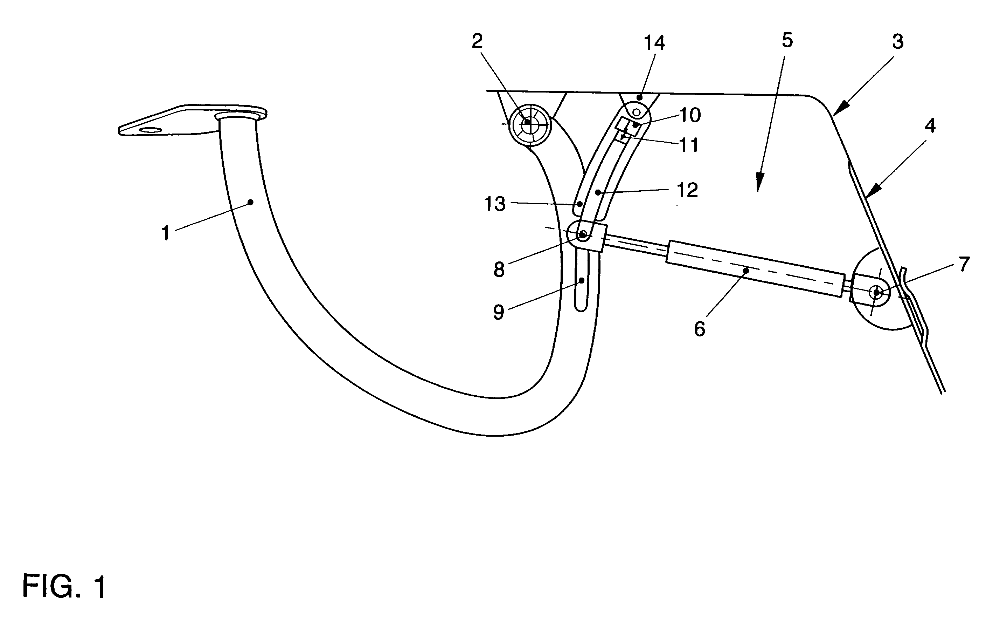

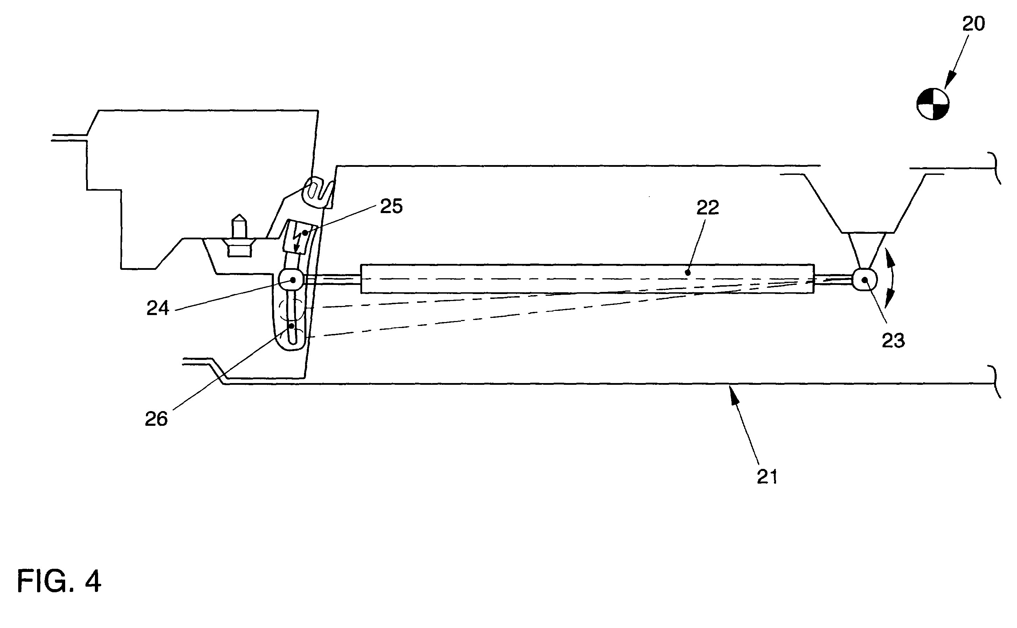

Zwei Ausführungsbeispiele der Erfindung werden im folgenden für bevorzugte Einsatzfälle anhand der Zeichnung erläutert. Dabei beziehen sich die Figuren 1, 2 und 3 auf eine Schwenklagerung einer Heckklappe eines Kraftfahrzeugs, während eine Ausführungsform der Erfindung für die Schwenklagerung einer Kraftfahrzeugtür anhand Figur 4 erläutert wird.

In den Figuren 1, 2 und 3, die Seitenansichten bei verschiedenen Temperaturen wiedergeben, bildet einen zentralen Bestandteil der Schwenklagerung der Scharnierbügel 1, dessen in den Figuren rechtes Ende mittels des Schwenklagers 2 am Rohbau 3 des Fahrzeugs schwenkbar befestigt ist, während sein in den Figuren linkes Ende mit der nicht dargestellten Heckklappe des Fahrzeugs starr verbunden ist. Unter dem Rohbau des Fahrzeugs soll derjenige Teil des Fahrzeugaufbaus verstanden sein, der an Schwenkbewegungen der Klappe nicht teilnimmt. Die Heckklappe ist in üblicher Weise dazu bestimmt, einen durch die Wand 4 gegen den Fahrgastraum abgetrennten Gepäckraum 5 zum Be- und Entladen möglichst frei zugänglich zu machen bzw. diesen Raum dicht gegen die Umgebung abzuschließen.

Dem Scharnierbügel 1 ist die Gasdruckfeder 6 zugeordnet, die bei 7 mittels eines üblichen Lagerbocks schwenkbar am Rohbau des Fahrzeugs abgestützt ist, während ihr in den Figuren linkes Ende über den Bolzen 8 am Scharnierbügel 1 angreift. Während beim Stand der Technik die Angriffsstelle der Gasfeder 6 am Scharnierbügel 1 während des gesamten Betriebs des Fahrzeugs unverändert bleibt, demgemäß ein konstanter Abstand zwischen dieser Angriffsstelle einerseits und dem Schwenklager andererseits vorliegt, also der so gebildete Hebelarm für die von der Gasfeder 6 auf den Scharnierbügel 1 ausgeübten Kräfte ebenfalls konstant bleibt, sieht die Erfindung eine temperaturabhängige Änderung des Ortes der Angriffsstelle der Gasfeder 6 an dem Bügel 1 vor. Der Bolzen 8 wird nämlich in dem bügelseitigen Langloch 9 geführt, und zwar erfolgt eine Verschiebung des Bolzens 8 in dem Langloch 9 mittels des Servomotors 10, der mit seiner Spindel 11 den Schieber 12 bei Betätigung des Servomotors verschiebt; der Schieber 12 greift seinerseits mit seinem in den Figuren unteren Ende schwenkbar an dem erwähnten Bolzen 8 an. Der Schieber 12 ist in der auf einem Kreisbogen um das Schwenklager 7 verlaufenden Führung 13 verschiebbar geführt, die ihrerseits bei 14 an den Fahrzeugrohbau 3 angelenkt ist. Das Langloch 9 liegt auf einem Kreisbogen um die Abstützung 7.

Dem Servomotor 10, der in beiden Drehrichtungen betätigbar ist, ist ein nicht dargestellter, da an sich bekannter Temperatursensor zugeordnet, der ihn in der Weise ansteuert, daß durch Änderung der Angriffsstelle der Gasfeder 6 an dem Scharnierbügel 1 der Hebelarm der von dieser auf den Bügel 1 ausgeübten Kräfte, bezogen auf das Schwenklager 2, so verändert wird, daß dadurch der Temperaturgang der von der Gasfeder 6 ausgeübten Kräfte kompensiert wird.

In Figur 1 ist der Fall einer relativ hohen Umgebungstemperatur angenommen. Aufgrund der Eigenschaften der Gasfüllung der Gasfeder 6 bedeutet dies, daß die von der Gasfeder 6 auf den Scharnierbügel 1 ausgeübten Druckkräfte relativ groß sind. Demgemäß erhält der Servomotor 10 von dem erwähnten Temperatursensor Signale, die ein Arbeiten des Servomotors 10 mit solcher Drehrichtung zur Folge haben, daß er den Schieber 12 in den Figuren weit nach oben gezogen hat. Das bedeutet, daß auch der Bolzen 8 in dem Langloch 9 eine relativ hohe Stellung eingenommen hat, also der Abstand von dem Schwenklager 2 und damit auch der Hebelarm für die von der Gasfeder 6 ausgeübten Kräfte sein Minimum hat. Die von der Gasfeder ausgeübten Kräfte erzeugen demgemäß ein Moment einer bestimmten Größe.

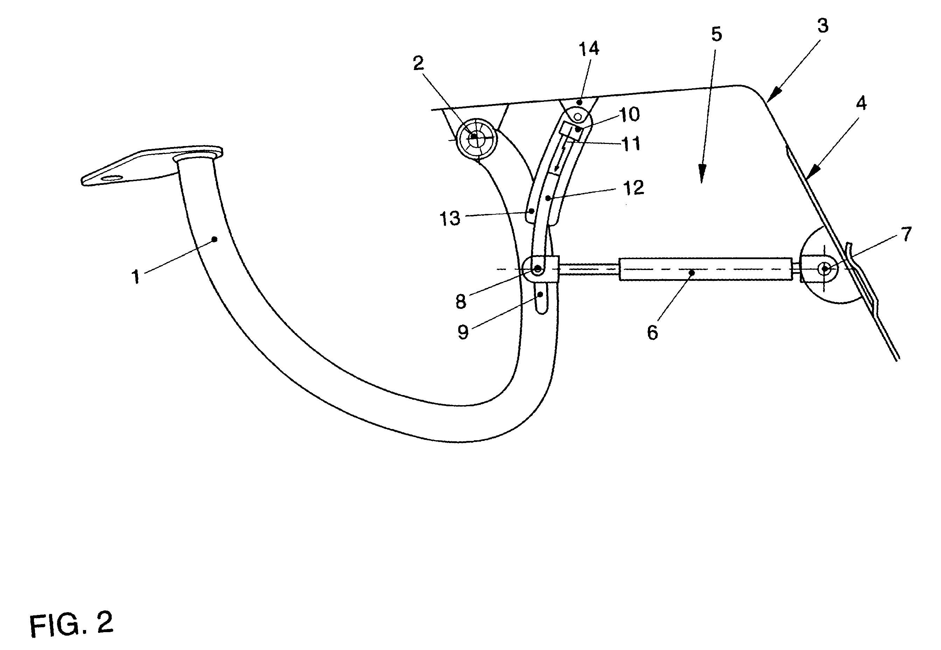

In Figur 2 liegt eine mittlere Temperatur vor. Man erkennt, daß jetzt der Servomotor 10 so angesteuert ist, daß er den Schieber 12 etwas nach unten verschoben hat, also die Angriffsstelle der Gasfeder 6, gegeben durch die Lage des Bolzens 8, an dem Scharnierbügel 1 tiefer als in Figur 1 ist. Infolge der niedrigeren Temperatur sind auch die von der Gasfeder 6 auf den Scharnierbügel 1 ausgeübten Kräfte kleiner als im Falle der Figur 1; dies wird aber durch die Vergrößerung des Hebelarms bezüglich des Schwenklagers 2 kompensiert. Im Endergebnis ist also die von der Gasfeder 6 ausgeübte Wirkung hinsichtlich der Unterstützung hier der Öffnungsbewegung der Heckklappe praktisch dieselbe geblieben wie in Figur 1.

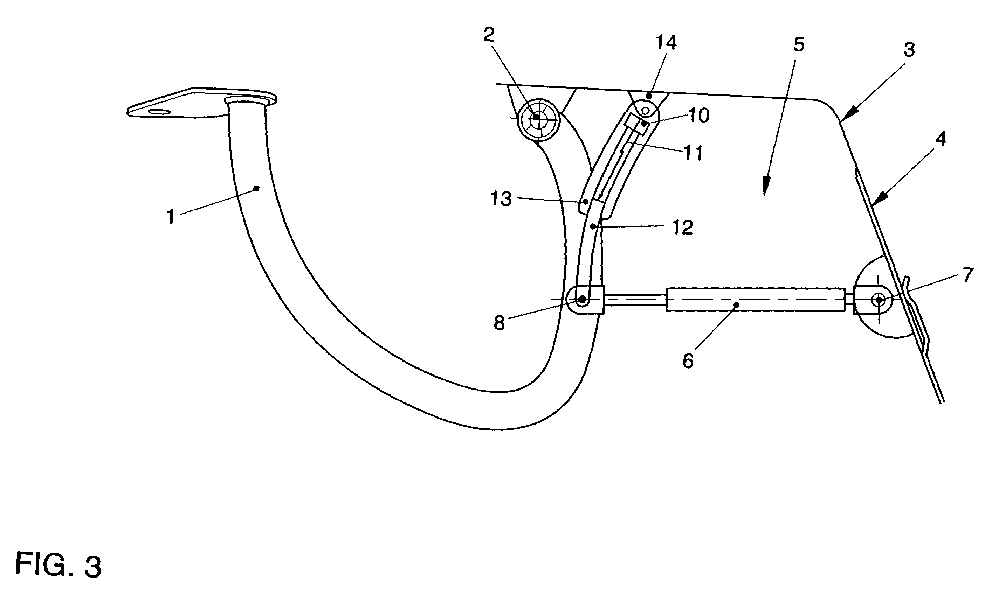

In Figur 3 schließlich ist der Fall sehr niedriger Temperaturen angenommen. Wie unmittelbar ersichtlich, hat der Servomotor den Schieber 12 und damit auch den Bolzen 8 in seine niedrigste Stellung verschoben, so daß der mehrfach definierte Hebelarm sein Maximum erreicht hat und wiederum eine Kompensation der Verringerung der Kräfte der Gasfeder 6 erfolgt ist. Bei allen Temperaturen sind also die von der Gasfeder ausgeübten Momente etwa gleich groß.

In Figur 4 ist in Draufsicht eine Ausführung der Erfindung bei einer um das Schwenklager 20 schwenkbaren Kraftfahrzeugtür 21 gezeigt. Die Gasfeder 22 ist bei 23 an einem türfesten Lagerbock und bei 24 an der A- bzw. B-Säule, d.h. ortsfest, angelenkt. Der Ort der letztgenannten Anlenkung 24 ist mittels des Servos 25 längs des Langlochs 26 verschiebbar, so daß sich je nach herrschender Temperatur unterschiedliche, durch unterbrochene Linien angedeutete Richtungen für die von der Gasfeder auf die Tür 21 ausgeübten Kräfte ergeben. Ihr Temperaturgang wird also hier durch Zerlegung in Kraftkomponenten kompensiert.

Mit der Erfindung ist demgemäß eine gattungsgemäße Schwenklagerung geschaffen, die sich durch weitgehende Temperaturunabhängigkeit der von der Gasfeder ausgeübten Kräfte auszeichnet.

## Patentansprüche

1. Schwenklagerung für ein klappenartiges Bauteil, insbesondere eine Kraftfahrzeug-Heckklappe, an einem demgegenüber ortsfesten Teil mit einer einenends bauteilseitig und anderenends an dem ortsfesten Teil angelenkten Gasfeder zur Unterstützung von Schwenkbewegungen des klappenartigen Bauteils, dadurch gekennzeichnet, daß temperaturabhängige Mittel (10) zur Veränderung des Ortes zumindest einer der Anlenkungen (8) der Gasfeder (6) im Sinne einer Kompensation des Temperaturganges der von der Gasfeder (6) auf das klappenartige Bauteil ausgeübten Kraft vorgesehen sind.

2. Schwenklagerung nach Anspruch 1, dadurch gekennzeichnet, daß die eine Anlenkung der Gasfeder (6) ein Langloch (9) zur Führung eines gasfederseitigen Bolzens (8) enthält, an dem die Mittel (10) angreifen.

3. Schwenklagerung nach Anspruch 2, dadurch gekennzeichnet, daß die Mittel eine an dem Bolzen (8) angreifende Betätigungsstange (12) sowie einen in Verschiebeverbindung mit dieser stehenden Servo (10) enthalten.

4. Schwenklagerung nach einem der Ansprüche 1 bis 3, dadurch gekennzeichnet, daß ein Scharnierbügel (1) einenends über ein Schwenklager (2) an dem ortsfesten Teil (3) gehalten ist, anderenends mit dem klappenartigen Bauteil in Verbindung steht und an ihm in einem einen Hebelarm definierenden Abstand die Gasfeder (6) angelenkt ist, und daß die temperaturabhängigen Mittel (10) den Ort dieser Anlenkung (8) der Gasfeder (6) und damit den Hebelarm im Sinne einer Temperaturunabhängigkeit des von der Gasfeder auf das klappenartige Bauteil ausgeübten Moments verändernd ausgelegt sind.

5. Schwenklagerung nach einem der Ansprüche 1 bis 3, dadurch gekennzeichnet, daß die Gasfeder (22) einenends an dem klappenartigen Bauteil (21) und anderenends an einer ortsfesten Abstützung mit den temperaturabhängigen Mitteln (25) angelenkt ist, die den Ort dieser Anlenkung der Gasfeder (22) im Sinne einer Änderung der Richtung der von der Gasfeder (22) auf das klappenartige Bauteil (21) ausgeübten Kräfte verändernd ausgelegt sind.
